# EUROPÄISCHE PATENTSCHRIFT

(11) **EP 2 080 650 B1**
(45) Veröffentlichungstag und Bekanntmachung des Hinweises auf die Patenterteilung: **04.06.2014**
(21) Anmeldenummer: 08290052.3
(22) Anmeldetag: 21.01.2008
(51) Int. Cl.: B60H 1/22

(54) **Vorrichtung zur Heizung eines Luftstroms**
Device for heating an exhaust gas stream
Dispositif destiné au chauffage d'un flux d'air

(43) Veröffentlichungstag der Anmeldung: 22.07.2009
(73) Patentinhaber: Behr France Rouffach SAS, 68250 Rouffach (FR)
(72) Erfinder: Weingaertner, Stéphane, 68250 Pfaffenheim (FR); Robin, Nicolas, 67000 Strasbourg (FR); Denny, Geoffrey, 68170 Rixheim (FR); Eckerlen, Gerard, 68250 Rouffach (FR); Gogmos, Erwan, 92800 Puteaux (FR); Schmittheisler, Christophe, 67680 Epfig (FR); Mougey, Mathieu, 68190 Ensisheim (FR); Miss, Pascal, 67600 Sélestat (FR); Brun, Michel, 68740 Rustenhart (FR)
(74) Vertreter: Grauel, Andreas

(56) Entgegenhaltungen:
- EP-A- 1 241 032
- EP-A- 1 400 381
- EP-A- 1 621 378
- EP-A- 1 731 340
- DE-C1- 19 912 141
- DE-U1-202006 017 291

## Beschreibung

Die Erfindung betrifft eine Vorrichtung zur Heizung eines Luftstroms, insbesondere für ein Kraftfahrzeug, nach dem Oberbegriff des Anspruchs 1.

EP 1 621 378 A1 beschreibt eine elektrische Heizvorrichtung für ein Kraftfahrzeug, bei der in einem Rahmen ein elektrisches PTC-Heizelement neben einem als Gitter ausgebildeten Strömungswiderstandselement vorgesehen ist. Zwischen dem Gitter und dem Heizelement befinden sich jeweils in Luftströmungsrichtung erstreckte Stege des Rahmens, durch die ein Luftstrom durch das Strömungswiderstandselement von einem Luftstrom durch das Heizelement separiert wird.

Es ist die Aufgabe der Erfindung, eine Vorrichtung zur Heizung eines Luftstroms anzugeben, bei der möglichst unmittelbar hinter der Vorrichtung ein homogen aufgewärmter Luftstrom vorliegt.

Diese Aufgabe wird für eine eingangs genannte Vorrichtung erfindungsgemäß mit den kennzeichnenden Merkmalen des Anspruchs 1 gelöst. Durch das Strömungsmittel werden die beiden Lufttellströme, von denen der erste durch das Heizelement auf eine hohe Temperatur geheizt wird und der zweite im Bereich des Strömungswiderstandselement nicht beheizt wird, zumindest teilweise zusammengeführt und durchmischt. Hierdurch wird die Temperatur des Luftstroms bereits kurz hinter der Vorrichtung über einen Querschnitt des Luftkanals homogenisiert. Dies ist zum Beispiel vorteilhaft, wenn unmittelbar nach dem Heizelement eine Ausströmung in einen Fahrgastraum erfolgt, so dass lokale Jets heißer Luft vermieden werden. Bei Verzweigungen auf mehrere Luftkanäle, die aus baulichen Gründen kurz hinter der Vorrichtung angeordnet sind, stellen die erfindungsgemäßen Strömungsmittel sicher, dass alle Zweigkanäle mit der gleichen Lufttemperatur versorgt werden.

Allgemein vorteilhaft umfasst der Heizstrang zur Vergrößerung seiner Oberfläche eine thermisch leitende Rippe, insbesondere eine Wellrippe. Die Rippe kann zur optimalen thermischen Anbindung an einem Kontaktierungsblech des elektrischen Heizelements angeordnet sein. Insbesondere in dieser Bauart können Heizstränge zum Beispiel als Gleichteile oder auch als vorkonfektionierte Module für verschiedene Luftkanäle bzw. Formen und Maße von Rahmen vorgesehen werden.

Bei einer ersten bevorzugten Ausführungsform der Erfindung ist das Strömungsmittel dadurch ausgebildet, dass die Rippe in der Ebene an das Strömungswiderstandselement angrenzt, ohne dass ein Leitsteg des Rahmens zwischen Rippe und Strömungswiderstandelement vorgesehen ist. Durch das Weglassen des im Stand der Technik nach der EP 1 621 378 A1 jeweils neben einer Rippe vorgesehenen Stegs des Rahmens können bereits in der Ebene der Heizstränge Vermischungen zwischen den benachbarten Luftteilströmen stattfinden. Insbesondere im Bereich der Rippen treten regelmäßig Turbulenzen auf, die solche Durchmischungen in Querrichtung begünstigen.

Bei einer zweiten Ausführungsform der Erfindung, die zu der ersten Ausführungsform sowohl alternativ als auch ergänzend vorgesehen sein kann, ist das Strömungsmittel als auf zumindest einen der Teilströme in Querrichtung wirkende Leitstruktur ausgebildet. Eine solche gegenüber dem Stand der Technik zusätzlich vorgesehene Leitstruktur bewirkt eine besonders effektive Durchmischung der Teilströme. In kostengünstiger Detailgestaltung ist die Leitstruktur dabei materialeinheitlich einstückig mit dem Rahmen ausgebildet. Der Rahmen kann zum Beispiel ein Kunststoffteil, insbesondere Spritzgussteil sein, zum Beispiel aus Polyamid. Auf diese Weise kann insbesondere der Rahmen eine an die individuelle Applikation im Fahrzeug angepasste Formgebung haben und die Heizstränge sind als einheitliche Bauteile ausgebildet, die mit einer Vielzahl von unterschiedlichen Rahmen kombinierbar sind.

Bei einer möglichen Detailgestaltung ist die Leitstruktur austrittseitig der Vorrichtung angeordnet, so dass zumindest einer der abströmenden Luftströme mit einer Querkomponente oder auch einer Turbulenz versehen wird.

In einer Variante kann die Leitstruktur im Bereich des Heizelements angeordnet sein und insbesondere den erwärmten ersten Luftteilstrom in Richtung des zweiten Luftteilstroms ablenken. Alternativ oder ergänzend kann die Leitstruktur auch im Bereich des Strömungswiderstandselements angeordnet sein und insbesondere den zweiten Luftteilstrom in Richtung des erwärmten ersten Luftteilstroms ablenken.

Bei einer weiteren alternativen oder ergänzenden Variante ist die Leitstruktur integral mit dem Strömungswiderstandselement ausgebildet oder im Wesentlichen in einer Ebene mit dem Strömungswiderstandelement angeordnet. Hierdurch lässt sich insgesamt die Länge der Vorrichtung in Strömungsrichtung der Luft klein halten. Eine integrale Ausbildung mit dem Strömungswiderstandselement kann zum Beispiel dadurch erfolgen, dass das Strömungswiderstandselement geneigte Lamellen umfasst, mittels derer eine Querkomponente des zweiten Teilstroms erzielbar ist.

Weitere Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung beschrieben und anhand der anliegenden Zeichnungen näher erläutert.
- Fig. 1: zeigt eine schematische Darstellung einer Heizvorrichtung nach dem Stand der Technik.
- Fig. 2: zeigt eine schematische Darstellung einer ersten Ausführungsform der Erfindung.
- Fig. 3: zeigt eine teilweise Abbildung der Ausführungsform nach Fig. 2.
- Fig. 4: zeigt eine schematische Darstellung einer zweiten Ausführungsform der Erfindung.
- Fig. 5: zeigt eine schematische Darstellung einer dritten Ausführungsform der Erfindung.
- Fig. 6: zeigt eine schematische Darstellung einer vierten Ausführungsform der Erfindung.

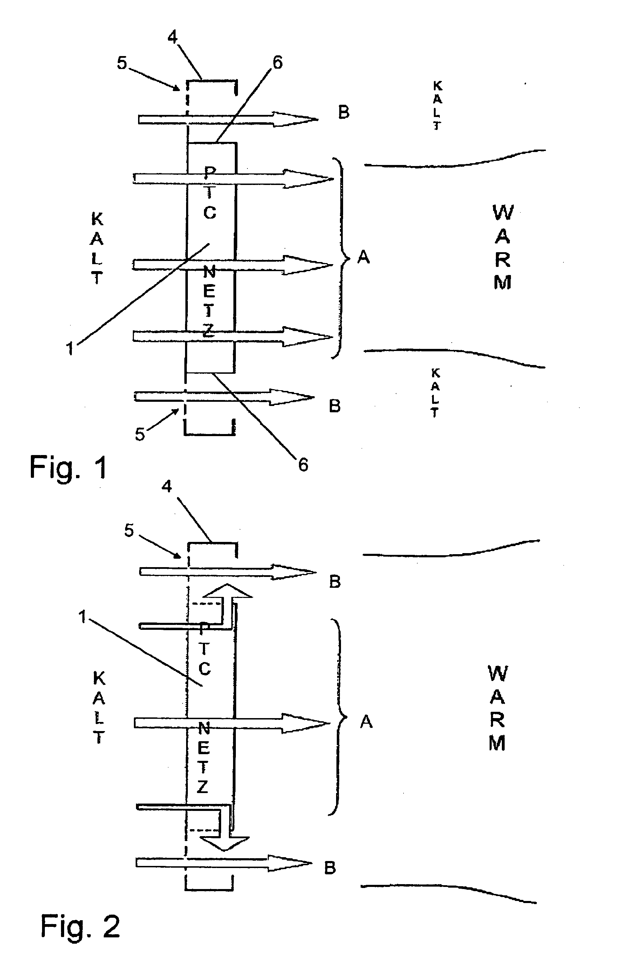

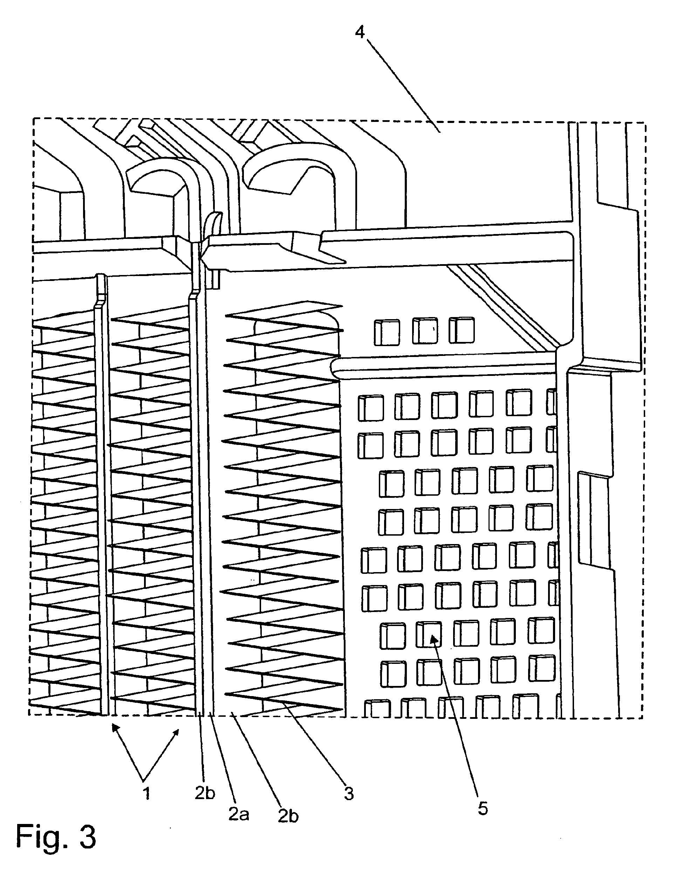

Bei der in Fig. 1 dargestellten, aus dem Stand der Technik, insbesondere der Druckschrift EP 1 621 378 A1 bekannten Vorrichtung sind mehrere Heizstränge 1, die jeweils ein PTC-Heizelement 2 (PTC = Positive Temperature Coefficient) mit daran angeordneten Wellrippen 3 (siehe Fig. 3) in einem Kunststoffrahmen 4 aus Polyamid aufgenommen. Die einzelnen Heizstränge sind wie im genannten Stand der Technik aufgebaut und umfassen zwischen länglichen Kontaktblechen 2b aufgenommene PTC-Elemente 2a, wobei die Wellrippen von außen auf den Kontaktblechen 2b festgelegt sind.

Die Vorrichtung ist ein Heizelement in einem Klimasystem eines Kraftfahrzeugs.

Der Rahmen erstreckt sich in einer Ebene senkrecht zur Fig. 1, wobei die Vorrichtung in Strömungsrichtung der Luft (horizontale Richtung nach Fig. 1) eine erheblich kleinere Ausdehnung hat als in der Ebene.

In dieser Ebene sind neben den Heizsträngen 1 Strömungswiderstandelemente 5 vorgesehen, die in Form eines Gitters materialeinheitlich mit dem Rahmen 4 ausgeformt sind. Durch die Strömungswiderstandselemente 5 wird ein ausreichender Druckabfall über der Vorrichtung sichergestellt, um einen genügenden Luftanteil an den Heizsträngen 1 zu erwärmen.

Die Vorrichtung teilt die gesamte durchströmende Luft somit in einen ersten Luftteilstrom A, der die Heizstränge 1 durchströmt und erwärmt wird und einen zweiten Luftteilstrom B, der die Strömungswiderstandselemente 5 durchströmt und nicht erwärmt wird. Dabei sind im Stand der Technik Leitstege 6 des Rahmens 4 zwischen den Heizsträngen 1 und den Strömungswiderstandselementen 5 vorgesehen, die eine Durchmischung der Luftteilströme A, B behindern.

In einer ersten Ausführungsform der Erfindung ist es gemäß Fig. 2 und Fig. 3 vorgesehen, diese Leitstege 6 nicht vorzusehen, so dass die Luftteilströme A, B ohne Trennung im Randbereich der Wellrippen 3 aneinander angrenzen. Hierdurch wird eine deutliche Vermischung der beiden Luftteilströme erzeugt. Je nach Auslegung der Gitter bzw. Strömungswiderstandelemente 5 kann hinter diesen Elementen zudem ein niedrigerer dynamischer Druck vorliegen, so dass wie in der schematischen Darstellung nach Fig. 2 eine teilweise Querströmung des ersten Teilstroms A in den zweiten Teilstrom B stattfindet. Eine solche Querströmung ist auch durch die wärmebedingte Ausdehnung der Luft des Teilstroms A unterstützt.

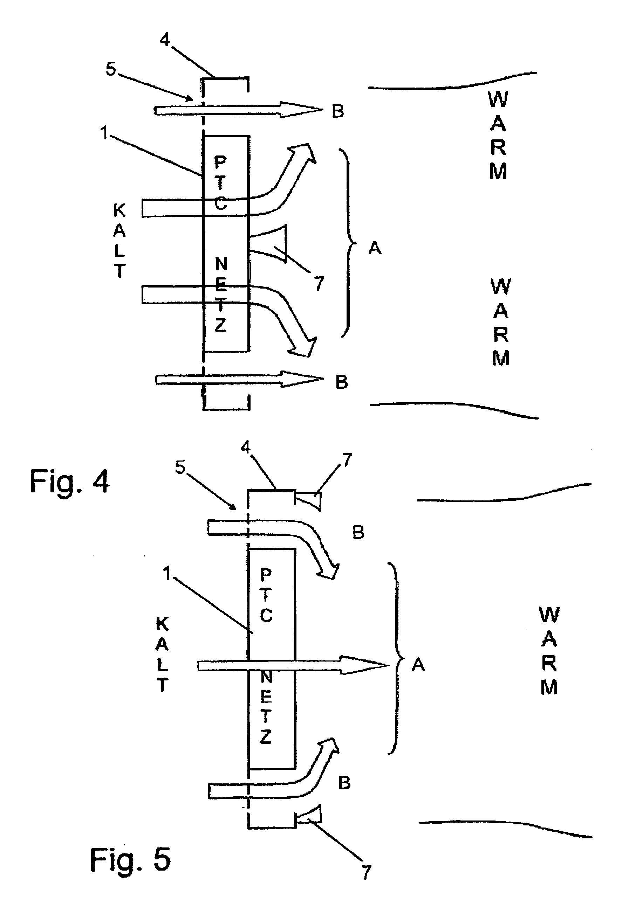

Bei einer weiteren, alternativen oder ergänzenden Ausführungsform der Erfindung gemäß Fig. 4 ist hinter dem Netz aus Heizsträngen 1 eine mit dem Kunststoffrahmen 4 materialeinheitlich einstückig ausgeformte Leitstruktur 7 zum Beispiel nach Art von ausgerichteten Lamellen vorgesehen. Durch die Leitstruktur 7 wird ein Teil des ersten Teilstroms A mit einer Querkomponente beaufschlagt, so dass bereits kurz hinter der Vorrichtung eine effektive Durchmischung der Luftteilströme A, B stattfindet.

Bei einer weiteren, alternativen oder ergänzenden Ausführungsform nach Fig. 5 ist die Leitstruktur 7 austrittsseitig im Bereich der Strömungswiderstandelemente 5 vorgesehen. Analog dem Beispiel nach Fig. 4 wird hierdurch der zweite Teilstrom B mit einer Querkomponente beaufschlagt, so dass er sich mit dem ersten Teilstrom A kurz hinter der Vorrichtung durchmischt.

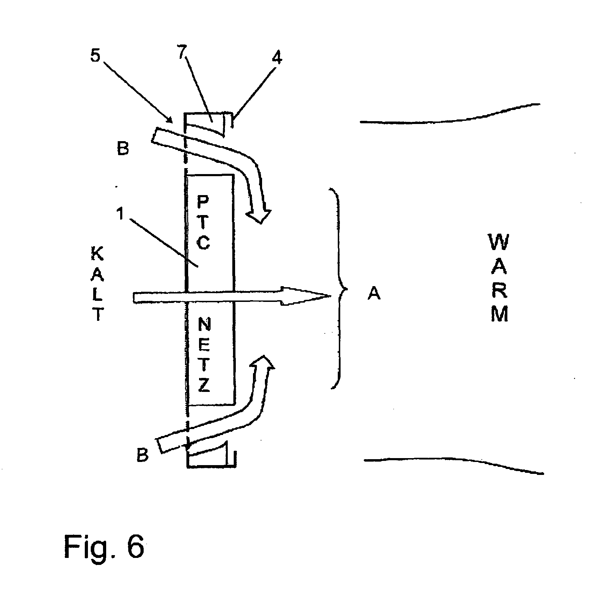

Bei einer weiteren, alternativen oder ergänzenden Ausführungsform nach Fig. 6 ist die Leitstruktur 7 im Wesentlichen in der gleichen Ebene wie die Heizstränge 1 angeordnet, wodurch die bauliche Länge der Vorrichtung in der Längsrichtung klein gehalten werden kann. Eine solche Leitstruktur kann zum Beispiel integral mit den Strömungswiderstandelementen 5 ausgeformt sein, zum Beispiel in Form von Lamellen.

Es versteht sich, dass die einzelnen Merkmale der verschiedenen Ausführungsbeispiele je nach Anforderungen sinnvoll miteinander kombiniert werden können.

## Patentansprüche

1. Vorrichtung zur Heizung eines Luftstroms, insbesondere für ein Kraftfahrzeug, umfassend
einen sich im Wesentlichen in einer Ebene erstreckenden Rahmen (4),
zumindest einen an dem Rahmen (4) gehaltenen, von einem ersten, erwärmbaren Luftteilstrom (A) durchströmbaren Heizstrang (1) mit einem elektrischen Heizelement (2), insbesondere PTC-Element, und zumindest einem in der Ebene neben dem Heizstrang (1) angeordneten und an dem Rahmen (4) gehaltenen, von einem zweiten, nicht erwärmbaren Luftteilstrom (B) durchströmbaren Strömungswiderstandselement (5),
**dadurch gekennzeichnet,**
**dass** an der Vorrichtung ein Strömungsmittel (7) vorgesehen ist, mittels dessen die beiden Luftteilströme (A, B) hinter der Vorrichtung durchmischt werden.

2. Vorrichtung nach Anspruch 1, **dadurch gekennzeichnet, dass** der Heizstrang (1) eine thermisch leitende Rippe (3), insbesondere Wellrippe, umfasst.

3. Vorrichtung nach Anspruch 2, **dadurch gekennzeichnet, dass** die Rippe (3) an einem Kontaktierungsblech (2b) des elektrischen Heizelements (2) angeordnet ist.

4. Vorrichtung nach Anspruch 2 oder 3, **dadurch gekennzeichnet, dass** das Strömungsmittel dadurch ausgebildet ist, dass die Rippe (3) in der Ebene an das Strömungswiderstandselement (5) angrenzt, ohne dass ein Leitsteg (6) des Rahmens (4) zwischen Rippe (3) und Strömungswiderstandelement (5) vorgesehen ist.

5. Vorrichtung nach einem der vorhergehenden Ansprüche, **dadurch gekennzeichnet, dass** das Strömungsmittel als auf zumindest einen der Teilströme (A, B) in Querrichtung wirkende Leitstruktur (7) ausgebildet ist.

6. Vorrichtung nach Anspruch 5, **dadurch gekennzeichnet, dass** die Leitstruktur (7) materialeinheitlich einstückig mit dem Rahmen (4) ausgebildet ist.

7. Vorrichtung nach Anspruch 5 oder 6, **dadurch gekennzeichnet, dass** die Leitstruktur (7) austrittsseitig der Vorrichtung angeordnet ist.

8. Vorrichtung nach einem der Ansprüche 5 bis 7, **dadurch gekennzeichnet, dass** die Leitstruktur (7) im Bereich des Heizstrangs (1) angeordnet ist und insbesondere den erwärmten ersten Luftteilstrom (A) in Richtung des zweiten Luftteilstroms (B) ablenkt.

9. Vorrichtung nach einem der Ansprüche 5 bis 8, **dadurch gekennzeichnet, dass** die Leitstruktur (7) im Bereich des Strömungswiderstandselements (5) angeordnet ist und insbesondere den zweiten Luftteilstrom (B) in Richtung des erwärmten ersten Luftteilstroms (A) ablenkt.

10. Vorrichtung nach einem der Ansprüche 5 bis 9, **dadurch gekennzeichnet, dass** die Leitstruktur (7) integral mit dem Strömungswiderstandselement (5) ausgebildet ist oder im Wesentlichen in einer Ebene mit dem Strömungswiderstandelement (5) angeordnet ist.

## Claims

1. A device for heating an airflow, in particular for a motor vehicle, comprising a frame (4) which extends substantially in a plane, at least one heating section (1), which is held on the frame (4) and through which a first, heatable partial airflow (A) can flow, with an electrical heating element (2), in particular a PTC element, and with at least one flow resistance element (5), which is arranged in the plane adjacent to the heating section (1) and which is held on the frame (4) and through which a second, non-heatable partial airflow (B) can flow, **characterized in that** a flow structure (7) is provided on the device and mixes the two partial airflows (A, B) downstream of the device.

2. The device as claimed in claim 1, **characterized in that** the heating section (1) comprises a thermally conducting fin (3), in particular a corrugated fin.

3. The device as claimed in claim 2, **characterized in that** the fin (3) is arranged on a contact plate (2b) of the electrical heating element (2).

4. The device as claimed in claim 2 or 3, **characterized in that** the flow structure is formed such that the fin (3) adjoins the flow resistance element (5) in the plane, without a guide web (6) of the frame (4) being provided between the fin (3) and the flow resistance element (5).

5. The device as claimed in claim one of the preceding claims, **characterized in that** the flow structure is formed as a guide structure (7) which acts on at least one of the partial flows (A, B) in the transverse direction.

6. The device as claimed in claim 5, **characterized in that** the guide structure (7) is formed in a materially integral fashion with the frame (4).

7. The device as claimed in claim 5 or 6, **characterized in that** the guide structure (7) is arranged at an outlet side of the device.

8. The device as claimed in one of claims 5 to 7, **characterized in that** the guide structure (7) is arranged in the region of the heating section (1) and in particular deflects the heated first partial airflow (A) in the direction of the second partial airflow (B).

9. The device as claimed in one of claims 5 to 8, **characterized in that** the guide structure (7) is arranged in the region of the flow resistance element (5) and in particular deflects the second partial airflow (B) in the direction of the heated first partial airflow (A).

10. The device as claimed in one of claims 5 to 9, **characterized in that** the guide structure (7) is formed integrally with the flow resistance element (5) or is arranged substantially in a plane with the flow resistance element (5).

## Revendications

1. Dispositif de chauffage d'un flux d'air, en particulier pour un véhicule automobile, comprenant un cadre (4) s'étendant essentiellement dans un plan, au moins un circuit chauffant (1) maintenu sur le cadre (4) et pouvant être traversé par un premier flux d'air partiel (A) pouvant être chauffé, ledit circuit chauffant comprenant un élément chauffant électrique (2), en particulier un élément à coefficient de température positif (CTP), et au moins un élément (5) de résistance à l'écoulement qui est disposé dans le plan situé à proximité du circuit chauffant (1) et maintenu sur le cadre (4), et qui peut être traversé par un deuxième flux d'air partiel (B) ne pouvant pas être chauffé, **caractérisé en ce qu'**il est prévu, sur le dispositif, un moyen d'écoulement (7) au moyen duquel les deux flux d'air partiels (A, B) sont mélangés derrière le dispositif.

2. Dispositif selon la revendication 1, **caractérisé en ce que** le circuit chauffant (1) comprend une ailette (3), en particulier une ailette ondulée, thermiquement conductrice.

3. Dispositif selon la revendication 2, **caractérisé en ce que** l'ailette (3) est disposée sur une tôle de mise en contact (2b) de l'élément chauffant électrique (2).

4. Dispositif selon la revendication 2 ou 3, **caractérisé en ce que** le moyen d'écoulement est configuré par le fait que l'ailette (3) est contiguë, dans le plan, à l'élément (5) de résistance à l'écoulement, sans qu'une barrette déflectrice (6) du cadre (4) soit prévue entre l'ailette (3) et l'élément (5) de résistance à l'écoulement.

5. Dispositif selon l'une quelconque des revendications précédentes, **caractérisé en ce que** le moyen d'écoulement est configuré comme une structure déflectrice (7) agissant, dans la direction transversale, sur au moins l'un des flux d'air partiels (A, B).

6. Dispositif selon la revendication 5, **caractérisé en ce que** la structure déflectrice (7) est configurée en formant une seule et même pièce avec le cadre (4) et composée du même matériau que ledit cadre.

7. Dispositif selon la revendication 5 ou 6, **caractérisé en ce que** la structure déflectrice (7) est disposée sur le côté sortie du dispositif.

8. Dispositif selon l'une quelconque des revendications 5 à 7, **caractérisé en ce que** la structure déflectrice (7) est disposée dans la zone du circuit chauffant (1) et dévie en particulier le premier flux d'air partiel chauffé (A), en direction du deuxième flux d'air partiel (B).

9. Dispositif selon l'une quelconque des revendications 5 à 8, **caractérisé en ce que** la structure déflectrice (7) est disposée dans la zone de l'élément (5) de résistance à l'écoulement et dévie en particulier le deuxième flux d'air partiel (B), en direction du premier flux d'air partiel chauffé (A).

10. Dispositif selon l'une quelconque des revendications 5 à 9, **caractérisé en ce que** la structure déflectrice (7) est configurée en étant solidaire de l'élément (5) de résistance à l'écoulement ou bien est disposée essentiellement dans un plan formé par l'élément (5) de résistance à l'écoulement.
